# EUROPÄISCHE PATENTSCHRIFT

(11) **EP 1 553 403 B1**
(45) Veröffentlichungstag und Bekanntmachung des Hinweises auf die Patenterteilung: **04.10.2006**
(21) Anmeldenummer: 04000117.4
(22) Anmeldetag: 07.01.2004
(51) Int. Cl.: G01N 21/88, G01J 1/16

(54) **Verfahren und Einrichtung zum Überprüfen eines Glasschutzrohres für die Glühwendel einer Infrarotstrahlerwärmequelle auf Unversertheit**
Method and apparatus for inspecting the integrity of a protective glass tube for an incandescent filament with infrared emission
Procédé et appareil pour le contrôle de l'intégrité d'un tube de verre pour la protection d'un filament incandescent a émission infrarouge

(43) Veröffentlichungstag der Anmeldung: 13.07.2005
(73) Patentinhaber: Schaft, Volker Dipl.-Ing., D-2000 Hamburg65 (DE)
(72) Erfinder: Schaft, Volker Dipl.-Ing., D-2000 Hamburg65 (DE)
(74) Vertreter: von Eichel-Streiber, Caspar

(56) Entgegenhaltungen:
- US-A- 3 533 704
- US-A- 3 777 171

## Beschreibung

Die Erfindung betrifft ein Verfahren gemäß dem Oberbegriff des Anspruchs 1.

In technischen Erwärmungsverfahren wird auf den verschiedensten Gebieten häufig mittelwellige Infrarotstrahlung eingesetzt, um Prozeßwärme einzuspeisen. Als Wärmequellen dienen dabei häufig mittelwellige Strahlungsquellen, wie Glühdrahtwendeln, die von einem klaren, für Infrarotstrahlung durchlässigen Glasschutzrohr bzw. mehreren solcher Rohre umgeben sind. Diese Rohre sind stirnseitig offen, da es nicht erforderlich ist, die Glühwendel gegen die Umgebungsluft abzuschirmen - diese können im mittelwelligen Infrarot-Bereich an Luft stabil über mehrere Jahre oxidationsfrei betrieben werden. Das Glasschutzrohr wird vielmehr primär für den elektrischen Schutz benötigt.

Da die Umgebungsluft im wesentlichen ohne Einfluß auf die Glühwendel ist, führt ein Bruch des Glasschutzrohres anders als beispielsweise ein Bruch des Glaskolbens bei einer herkömmlichen Glühlampe nicht zwangsweise zu einer Veränderung des elektrischen Verhaltens der Infrarotstrahlerwärmequelle. Somit besteht die Gefahr, daß ein derartiger Bruch unbemerkt bleibt.

Abgesehen davon, daß bei gebrochenem Glasschutzrohr die elektrische Isolierung nicht mehr sicher gegeben ist, ist es bei der Anwendung dieser Infrarotstrahlerwärmequellen in empfindlichen Prozessen erforderlich, eine Verschmutzung des Bestrahlungsgutes mit Glasbruchstücken zu verhindern oder den Prozeß bei einem Glasbruch umgehend zu stoppen, damit alle Teile, die mit Glasbruchstücken in Verbindung gekommen sein können, ausgesondert werden können und eine Verschmutzung weiteren Prozeßgutes unterbleibt.

In der US 3,533,704 sind ein Verfahren und eine Vorrichtung offenbart, bei denen mit Hilfe von Licht Glasgegenstände, bspw. Glasrohre, in einer Art Qualitätskontrolle nach der Herstellung auf Brüche getestet werden. Dazu wird Licht frontal in den Glasgegenstand eingeleitet und mit einem Detektor das aus dem Glas austretende Licht untersucht. Intensitätsschwankungen zeigen einen Bruch an.

In der US 3,777,171 werden ein ähnliches Verfahren und eine vergleichbare Vorrichtung angegeben, die der Detektion von Einschlüssen bzw. Inhomogenitäten in Glasgegenständen, bspw. Glasrohren, dienen.

Die in den beiden genannten Druckschriften genannten Verfahren und Vorrichtungen dienen der Qualitätskontrolle und sind nicht für den Einsatz zur Überwachung eines Glasschutzrohres während des Betriebes einer Infrarotstrahlerwärmequelle oder eine andere insitu Überwachung vorgesehen.

Vor diesem Hintergrund ist es **Aufgabe** der Erfindung, ein Verfahren und eine Einrichtung zu schaffen, mit dem bzw. mit der ein Glasschutzrohr für eine Glühwendel einer Infrarotstrahlerwärmequelle während des Betriebes zuverlässig auf Unversehrtheit überprüft und ein Bruch desselben sicher festgestellt werden kann.

Zur **Lösung** dieser Aufgabe wird mit der Erfindung ein Verfahren gemäß Anspruch 1 bzw. eine Einrichtung nach Anspruch 6 vorgeschlagen.

Vorteilhafte Ausgestaltungen des Verfahrens sind in den Ansprüchen 2 bis 5, Weiterbildungen der Vorrichtung sind in den Ansprüchen 7 bis 10 angegeben.

Die Erfindung baut auf der Erkenntnis auf, daß ein Bruch eine Veränderung der optischen Eigenschaften des Glasschutzrohres bedingt. Es verändert sich durch Bruchkanten in dem Material die Lichtleitfähigkeit des Materials (an derartigen Bruchkanten kommt es zu Teil- bzw. sogar Totalreflektionen) und es können Interferenzphänomene auftreten, die eine Veränderung der Phase des Lichtes sowie der Intensität hervorrufen können. Bisweilen kann man Veränderungen der optischen Eigenschaften des Glases, insbesondere des Quarzglases, bereits vor einem sichtbaren Bruch feststellen, wenn das Material auf kristalliner Ebene bereits Veränderungen erfahren hat.

Diese Tatsache wird dadurch ausgenutzt, daß Analyselicht in das Material des Glasschutzrohres eingekoppelt und durch das Material durchgeleitet wird. Am Ende des Materials wird das Analyselicht detektiert und analysiert, bspw. hinsichtlich der Intensität, der Phase oder der Wellenlänge. Bei intaktem Glasschutzrohr wird dann eine Eichung vorgenommen, d.h. die Analysewerte bei intaktem Glasschutzrohr werden bestimmt und als Richtwerte für ein intaktes Glasschutzrohr behandelt. Kommt es im Betrieb der Infrarotstrahlerwärmequelle dann zu Abweichungen dieser Analysewerte in einem vorbestimmten, außerhalb einer Toleranzgrenze liegenden Umfang, kann auf einen Glasbruch geschlossen werden.

Dabei ist vorgesehen, das Analyselicht von einer Stirnseite des Glasschutzrohres her in dessen Längsrichtung zu der gegenüberliegenden Stirnseite zu leiten. Auf diese Weise kann mit einem einzigen Lichtdurchtritt ein vergleichsweise großer Abschnitt des Glasschutzrohres auf Unversehrtheit überprüft bzw. überwacht werden.

Da Glasschutzrohre im intakten Zustand sich im wesentlichen wie ein optischer Leiter verhalten und nahezu keinen Strahlungsverlust haben, ist es möglich, den Strahl entweder mittels Mitteln zum Umlenken, wie z. B. Reflektoren, gebogenen Lichtleitfasern oder ähnlichem, umzulenken und dasselbe Glasschutzrohr an anderer Stelle erneut in entgegen gesetzter Richtung durchlaufen zu lassen oder mehrere Glasschutzrohre gleichermaßen optisch in Reihe geschaltet hintereinander durchlaufen zu lassen, ehe eine Detektion und Analyse erfolgt. Hierfür weist die erfindungsgemäße Einrichtung neben einer Lichtquelle, Mitteln zum Einleiten des Analyselichtstrahls in das Material des Glasschutzrohres, einem Detektor sowie Mitteln zum Analysieren des Analyselichtstrahls Mittel zum Umlenken des aus einer Stirnseite des Glasschutzrohres zum ortsversetzt entgegen gesetzten Wiedereintritt in dieselbe Stirnseite des Glasschutzrohres bzw. zum Einleiten des Analyselichtstrahles in eine Stirnseite eines weiteren Glasschutzrohres parallel zu dessen Längsrichtung auf und der Detektor ist an der Stirnseite eines Glasschutzrohres angeordnet, aus der der Analyselichtstrahl als letztes austritt.

Als Analyselichtstrahl wird ein Laserlichtstrahl bevorzugt, da Laserlicht zum einen mit guter Reproduzierbarkeit erzeugt werden kann, so daß eine einmal vorgenommene Eichung beibehalten werden kann, und da ein Laserlichtstrahl sehr gut gebündelt ist, er nahezu kein Streulicht erzeugt. Letzteres bedingt, daß der Strahl einfach vollständig in das Material eingebracht werden kann und bei intaktem Glasschutzrohr auch kein Licht abseits des vorgesehenen Lichtweges austritt und damit das Analyseergebnis beeinträchtigt.

Um Schwankungen in der Lichtquelle auszugleichen und nicht auf eine einmal vorgenommene Eichung zurückgreifen zu müssen, kann von dem Analyselichtstrahl ein Referenzlichtstrahl abgespalten werden, der ohne das Glasschutzrohr zu durchlaufen detektiert und analysiert und mit dem aus dem Glasschutzrohr austretenden Analyselichtstrahl verglichen wird. Bei zuvor bestimmten und festgelegten Abweichungen kann dann ein Bruch des Glasschutzrohres angezeigt werden. Das Aufteilen des Lichtstrahles kann bspw. mittels eines halbdurchlässigen Spiegels als Strahlteiler erfolgen.

Das erfindungsgemäße Verfahren bzw. die Einrichtung kann bei festgestelltem Bruch bspw. einen Alarm auslösen und den Produktionsprozeß automatisch anhalten.

Nachfolgend wird die Erfindung in anhand der beigefügten Figuren geschilderten Ausführungsbeispielen näher erläutert. Aus dieser Beschreibung lassen sich weitere Vorteile und Merkmale der Erfindung erkennen. In den Figuren zeigen:
- Fig. 1: ein erstes Ausführungsbeispiel einer erfindungsgemäßen Einrichtung zur Überprüfung eines Glasschutzrohres auf Unversehrtheit,
- Fig. 2: ein zweites Ausführungsbeispiel einer erfindungsgemäßen Einrichtung zur Überprüfung eines Glasschutzrohres auf Unversehrtheit und
- Fig. 3: ein Ausführungsbeispiel einer erfindungsgemäßen Einrichtung zur Überprüfung mehrerer Glasschutzrohre auf Unversehrtheit.

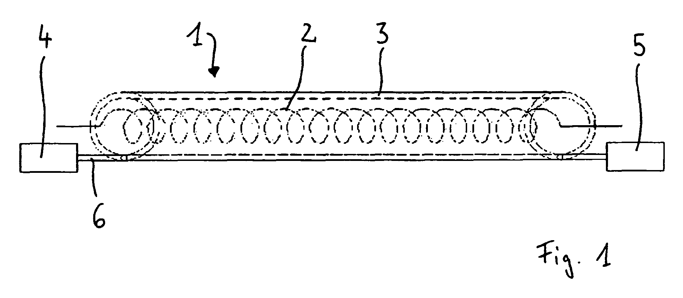

In Fig. 1 ist schematisch eine Infrarotstrahlerwärmequelle 1 gezeigt, welche eine erfindungsgemäße Einrichtung aufweist. Die Infrarotstrahlerwärmequelle 1 ist in diesem Beispiel aus einer Glühwendel 2 und einem dieses umgebenden, zylinderförmigen Glasschutzrohr 3 aus Quarzglas gebildet, welches an beiden Stirnseiten offen ist.

Um das Glasschutzrohr 3 auf Unversehrtheit zu überprüfen, ist eine Lichtquelle 4, bspw. ein Laser, vorgesehen, die einen Analyselichtstrahl 6 erzeugt. Dieser wird bspw. mit Hilfe einer Fokussieroptik oder eines Lichtleiters an eine Stirnseite des Glasschutzrohres 3 in dessen Material eingekoppelt.

An der gegenüberliegenden Stirnseite tritt der Analyselichtstrahl 6 aus dem Glasschutzrohr 3 aus und fällt in den dort angeordneten Detektor 5. Dort wird der Analyselichtstrahl analysiert und bei festgestellter Abweichung von einer vorgenommenen Eichung ein Bruch des Glasschutzrohres 3 festgestellt. Dann kann ein entsprechendes Signal ausgegeben werden.

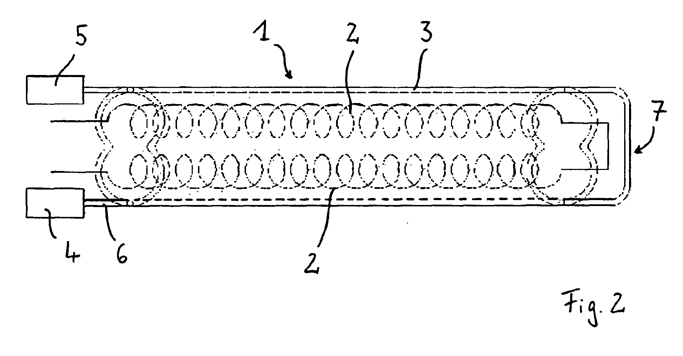

In Fig. 2 ist ein ähnliches Ausführungsbeispiel gezeigt. In der dort dargestellten Infrarotstrahlerwärmequelle 1 sind in einem Glasschutzrohr 3, in dem zwei parallele Aufnahmeräume ausgebildet sind, zwei Glühwendeln 2 parallel angeordnet. In diesem Beispiel liegen die Lichtquelle 4 und der Detektor 5 an einer Stirnseite des Glasschutzrohres 3. Der Analyselichtstrahl 6 wird stirnseitig in das Material des Glasschutzrohres 3 eingeleitet, tritt an der gegenüberliegenden Stirnseite wieder aus und wird im Bereich 7 mit geeigneten Mitteln (Spiegel, Lichtleitfaser, Prismen oder ähnlichem) umgelenkt, so daß es an anderer Stelle und in entgegen gesetzter Richtung wieder in das Material des Glasschutzrohres 3 eintritt und dieses erneut durchläuft. Auf diese Weise wird das Glasschutzrohr 3 entlang zweier Wege auf Unversehrtheit geprüft, und damit noch genauer. Zudem können Lichtquelle 4 und Detektor 5 auf einer Seite des Glasrohres 3 angeordnet werden, was Platz sparen kann und hinsichtlich der Versorgung mit Betriebsspannung sowie Signalleitungen von Vorteil sein kann.

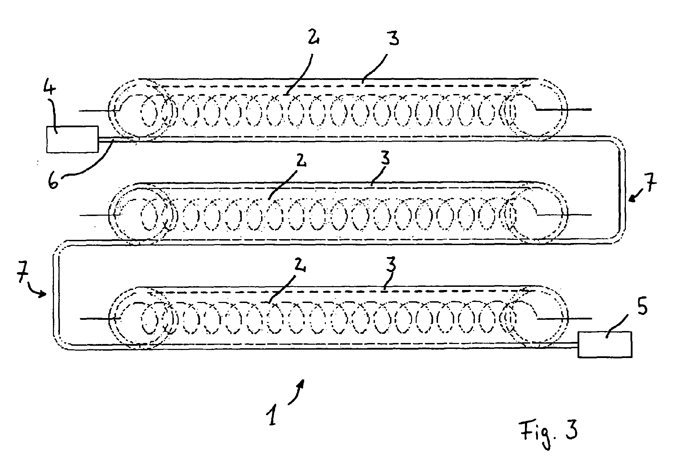

Die in Fig. 3 gezeigte Infrarotstrahlerwärmequelle 1 enthält in paralleler Anordnung drei jeweils von einem eigenen Glasschutzrohr 3 umgebene Glühwendeln 2. Hier wird das von der Lichtquelle 4 erzeugte Analyselicht 6 nacheinander durch die drei Glasschutzrohre 3 in deren Längsrichtung durchgeleitet, ehe es am Ende des dritten Glasschutzrohrs 3 auf den Detektor 5 trifft. In den Bereichen 7 wird das Analyselicht 6 wie oben zu Fig. 2 erläutert jeweils umgelenkt.

Diese Ausführungsvariante erlaubt die Überprüfung gleich mehrerer Glasschutzrohre 3 durch deren optische Hintereinanderschaltung. Die Anzahl der so hintereinander geschalteten Glasrohre 3 ist dabei nicht auf drei beschränkt, sondern prinzipiell beliebig. Eine Grenze wird lediglich durch die Absorption in dem Glas gesetzt, da diese für eine zuverlässige Analyse nicht zu hoch sein darf.

### Bezugszeichenliste

- 1: Infrarotstrahlerwärmequelle
- 2: Glühwendel
- 3: Glasschutzrohr
- 4: Lichtquelle
- 5: Detektor
- 6: Analyselichtstrahl
- 7: Bereich

## Patentansprüche

1. Verfahren zum Überprüfen eines Glasschutzrohres, insbesondere aus Quarzglas, für die Glühwendel einer Infrarotstrahlerwärmequelle auf Unversehrtheit, wobei ein Analyselichtstrahl in das Material des Glasschutzrohres ein- und durch dieses hindurchgeleitet wird und wobei der aus dem Glasschutzrohr austretende Analyselichtstrahl detektiert und hinsichtlich Intensität und/oder Wellenlänge und/oder Phase analysiert wird und wobei anhand der Analyse festgestellt wird, ob das Glasschutzrohr beschädigt oder unversehrt ist, **dadurch gekennzeichnet, daß** der Analyselichtstrahl stirnseitig in das Material des Glasschutzrohres ein- und in Längsrichtung durch dieses hindurchgeleitet wird.

2. Verfahren nach Anspruch 1, **dadurch gekennzeichnet, daß** der Analyselichtstrahl an einer ersten Stirnseite des Glasschutzrohres in das Material des Glasschutzrohres eingeleitet, an der gegenüber liegenden, zweiten Stirnseite des Glasschutzrohres zu einem weiteren Durchtritt durch das Glasschutzrohr an anderer Stelle und in entgegen gesetzter Richtung umgelenkt bzw. reflektiert und anschließend an der Stirnseite des Glasschutzrohres, an der er zunächst in das Material eingeleitet worden ist, detektiert und analysiert wird.

3. Verfahren nach einem der vorhergehenden Ansprüche, **dadurch gekennzeichnet, daß** der Analyselichtstrahl nacheinander jeweils in Längsrichtung durch mehrere Glasschutzrohre geleitet wird und erst nach Durchlaufen des letzten Glasschutzrohres detektiert und analysiert wird.

4. Verfahren nach einem der vorhergehenden Ansprüche, **dadurch gekennzeichnet, daß** der Analyselichtstrahl vor dem ersten Einleiten in eine Stirnseite eines Glasschutzrohres geteilt und so ein Referenzlichtstrahl abgespalten wird und daß der Referenzlichtstrahl ohne Durchleitung durch die Glasschutzrohre zum Vergleich zusammen mit dem aus dem Glasschutzrohr austretenden Analyselichtstrahl detektiert und analysiert wird.

5. Verfahren nach einem der vorhergehenden Ansprüche, **dadurch gekennzeichnet, daß** als Analyselicht Laserlicht verwendet wird.

6. Einrichtung zum Überprüfen eines Glasschutzrohres (3), insbesondere aus Quarzglas, für die Glühwendel (2) einer Infrarotstrahlerwärmequelle (1) auf Unversehrtheit mit: einer Lichtquelle (4) zum Erzeugen eines Analyselichtstrahls (6),
Mitteln zum Einleiten des Analyselichtstrahls (6) in das Material des Glasschutzrohres (3),
einem Detektor (5) zum Detektieren des aus dem Glasschutzrohr (3) austretenden Analyselichtstrahls (6) und Mitteln zum Analysieren des Analyselichtstrahls (6) hinsichtlich Intensität und/oder Wellenlänge und/oder Phase, **dadurch gekennzeichnet, daß** die Mittel zum Einleiten des Analyselichtstrahls (6) zum Einleiten des Analyselichtstrahls (6) an einer Stirnseite des Glasschutzrohres (3) parallel zu dessen Längsrichtung einrichtbar sind.

7. Einrichtung nach Anspruch 6, **dadurch gekennzeichnet, daß** diese Mittel zum Umlenken des aus einer Stirnseite des Glasschutzrohres (3) zum ortsversetzt entgegen gesetzten Wiedereintritt in dieselbe Stirnseite des Glasschutzrohres (3) bzw. zum Einleiten des Analyselichtstrahles (6) in eine Stirnseite eines weiteren Glasschutzrohres (3) parallel zu dessen Längsrichtung aufweisen und daß der Detektor (5) an der Stirnseite eines Glasschutzrohres (3) angeordnet ist, aus der der Analyselichtstrahl (6) als letztes austritt.

8. Einrichtung nach Anspruch 7, **dadurch gekennzeichnet, daß** die Mittel zum Umlenken des Analyselichtstrahles (6) eine Lichtleitfaser, einen Reflektor und/oder ein Prisma umfassen.

9. Einrichtung nach einem der Ansprüche 6 bis 8, **dadurch gekennzeichnet, daß** sie zwischen der Lichtquelle (4) und der Stirnseite des Glasschutzrohres (3), in die der Analyselichtstrahl (6) zuerst eintritt, einen Strahlteiler zum Erzeugen eines Referenzlichtstrahles aufweist, wobei Mittel vorgesehen sind, den Referenzlichtstrahl zu dem Detektor (5) zu leiten.

10. Einrichtung nach einem der Ansprüche 6 bis 9, **dadurch gekennzeichnet, daß** die Lichtquelle (4) eine LaserLichtquelle ist.

## Claims

1. Method for inspecting a protective glass tube, particularly a quartz glass tube for the coiled filament of an infrared radiation heating source for the integrity thereof, an analysis light beam being passed into the protective glass tube material and through the same and in which the analysis light beam passing out of the protective glass tube is detected and analyzed with respect to intensity and/or wavelength and/or phase and in which by analysis it is established whether the protective glass tube is damaged or integral, **characterized in that** the analysis light beam frontally enters the protective glass tube material and is longitudinally passed through the same.

2. Method according to claim 1, **characterized in that** the analysis light beam is introduced into the protective glass tube material on a first front end of said protective glass tube and at the opposite, second front end of the protective glass tube is deflected or reflected for a further passage through the protective glass tube at a different location and in the opposite direction and is then detected and analyzed at the front end of the protective glass tube at which it was initially introduced into the material thereof.

3. Method according to one of the preceding claims, **characterized in that** the analysis light beam is successively passed longitudinally through several protective glass tubes and only after passing through the final protective glass tube is it detected and analyzed.

4. Method according to one of the preceding claims, **characterized in that** prior to the first introduction into a front end of a protective glass tube the analysis light beam is split in this way a reference light beam is separated and that the reference light beam, without passing through the protective glass tubes, is detected and analyzed together with the analysis light beam passing out of the protective glass tube.

5. Method according to one of the preceding claims, **characterized in that** laser light is used as the analysis light.

6. Device for inspecting a protective glass tube (3), particularly a quartz glass tube, for the coiled filament (2) of an infrared radiation heating source (1) for the integrity thereof and having:
a light source (4) for generating an analysis light beam (6),
means for introducing an analysis light beam (6) into the material of the protective glass tube (3),
a detector (5) for detecting the analysis light beam (6) passing out of the protective glass tube (3) and means for analyzing the analysis light beam (6) with respect to intensity and/or wavelength and/or phase,
**characterized in that** the means for introducing an analysis light beam (6) at a front end of the protective glass tube (3) can be set up parallel to its longitudinal direction.

7. Device according to claim 6, **characterized in that** it has means for deflecting the analysis light beam (6) from a front side of the protective glass tube (3) for the position-shifted, opposite reentry thereof into the same front end of the protective glass tube (3) or for introducing the analysis light beam (6) into a front end of a further protective glass tube (3) parallel to its longitudinal direction and that the detector (5) is located on the front end of a protective glass tube (3) from which the analysis light beam (6) passes out last.

8. Device according to claim 7, **characterized in that** the means for deflecting an analysis light beam (6) comprise a light-conducting fibre, a reflector and/or a prism.

9. Device according to one of the claims 6 to 8, **characterized in that** it has a beam splitter for generating a reference light beam between light source (4) and the front end of the protective glass tube (3) entered first by the analysis light beam (6), means being provided for conducting the reference light beam to the detector (5).

10. Device according to one of the claims 6 to 9, **characterized in that** the light source (4) is a laser light source.

## Revendications

1. Procédé destiné à la vérification d'un tube protecteur en verre, en particulier en verre de Quartz, destiné à la vérification de l'intégrité du filament boudiné d'une source de chaleur d'un émetteur à rayons infrarouges, un rayon lumineux d'analyse étant introduit dans le matériau du tube de protection en verre et transmis à travers celui-ci, et le rayon lumineux d'analyse sortant du tube de protection en verre étant détecté et analysé par rapport à son intensité et/ou sa longueur d'onde et/ou sa phase, et, cette analyse permettant de déterminer si le tube de protection en verre a été endommagé ou s'il est intègre, **caractérisé en ce que** le rayon lumineux d'analyse est introduit au niveau de sa face frontale dans le matériau du tube de protection en verre et est transmis à travers celui-ci dans la direction de la longueur.

2. Procédé selon la revendication 1, **caractérisé en ce que** le rayon lumineux d'analyse est introduit dans le matériau du tube de protection en verre à partir d'une première face frontale du tube de protection en verre, et dévié, respectivement, reflété, au niveau d'une seconde face frontale opposée du tube de protection en verre, vers un passage supplémentaire à travers le tube de protection en verre à un autre emplacement et dans la direction opposée, puis, est détecté et analysé au niveau de la face frontale du tube de protection en verre, sur laquelle il a été tout d'abord introduit.

3. Procédé selon l'une quelconque des revendications précédentes, **caractérisé en ce que** le rayon lumineux d'analyse est amené, à la suite, et respectivement dans la direction longitudinale, à travers plusieurs tubes de protection en verre, et n'est détecté et analysé qu'après avoir traversé le dernier tube de protection en verre.

4. Procédé selon l'une quelconque des revendications précédentes, **caractérisé en ce que** le rayon lumineux d'analyse est divisé avant la première introduction dans une face frontale d'un tube de protection en verre et un rayon lumineux de référence est donc séparé, et **en ce que** le rayon lumineux de référence sans le passage à travers les tubes de protection en verre est détecté et analysé, en vue d'être comparé au rayon lumineux d'analyse sortant du tube de protection en verre.

5. Procédé selon l'une quelconque des revendications précédentes, **caractérisé en ce qu'**une lumière laser est utilisée en tant que lumière d'analyse.

6. Dispositif destiné à la vérification d'un tube de protection en verre (3), en particulier en verre à Quartz, destiné à la vérification de l'intégrité du filament boudiné (2) d'une source de chaleur d'un émetteur à rayons infrarouges (1), comportant :
une source de lumière (4) pour produire
un rayon lumineux d'analyse (6),
des moyens pour introduire le rayon lumineux d'analyse (6) dans le matériau du tube de protection en verre (3),
un détecteur (5) pour détecter le rayon lumineux d'analyse (6) sortant du tube de protection en verre (3) et
des moyens pour analyser le rayon lumineux d'analyse (6) par rapport à son intensité et/ou sa longueur d'onde et/ou sa phase, **caractérisé en ce que** les moyens pour introduire le rayon lumineux d'analyse (6) sur une face frontale du tube de protection en verre (3) peuvent être réglés parallèlement par rapport à la direction longitudinale de ce dernier.

7. Dispositif selon la revendication 6, **caractérisé en ce que** ces moyens pour dévier le rayon lumineux d'analyse (6) à partir d'une face avant du tube de protection en verre (3) pour une réintroduction à un autre emplacement à l'opposé dans la même face avant du tube de protection en verre (3) et/ou pour introduire le rayon lumineux d'analyse (3) dans une face avant d'un autre tube de protection en verre (3), sont parallèles à la direction longitudinale de ce dernier, et **en ce que** le détecteur (5) est disposé sur la face frontale d'un tube de protection en verre (3), de laquelle le rayon lumineux d'analyse (6) sort en dernier.

8. Dispositif selon la revendication 7, **caractérisé en ce que** les moyens pour dévier le rayon lumineux d'analyse (6) comprennent une fibre optique, un réflecteur et/ou un prisme.

9. Dispositif selon l'une quelconque des revendications 6 à 8, **caractérisé en ce qu'**il présente une lame séparatrice destinée à produire un rayon lumineux de référence entre la source lumineuse (4) et la face avant du tube de protection en verre (3), dans laquelle pénètre tout d'abord le rayon lumineux d'analyse (6), des moyens étant prévus pour amener le rayon lumineux de référence vers le détecteur (5).

10. Dispositif selon l'une quelconque des revendications 6 à 9, **caractérisé en ce que** la source lumineuse (4) est une source lumineuse laser.
